# EUROPÄISCHE PATENTANMELDUNG

(11) **EP 0 850 750 A2**
(43) Veröffentlichungstag der Anmeldung: **01.07.1998**
(21) Anmeldenummer: 97113433.3
(22) Anmeldetag: 04.08.1997
(51) Int. Cl.: B29D 11/00, B29C 33/38

(54) **Verfahren zur Herstellung eines mikrostrukturierten Körpers, eines Gussrahmens, und eines integriert-optischen Bauteils**

(30) Priorität: 12.10.1996 DE 19642088
(71) Anmelder: ROBERT BOSCH GMBH, 70442 Stuttgart (DE)
(72) Erfinder: Kragl, Hans, Dr., 31199 Diekholzen (DE)

(57) **Zusammenfassung**

Es wird ein Verfahren zur Herstellung eines mikrostrukturierten Körpers (100) vorgeschlagen. Hierbei wird eine Gußform (20) aus einem Gußrahmen und einer Bodenplatte (10) gebildet und mit Reaktionsgußmasse (27) befüllt. Nach dem Aushärten ist der Gußrahmen Bestandteil des Bauteils, während die Bodenplatte wiederverwendet werden kann. Da sowohl die Grundplatte als auch der Rahmen mit mikrostrukturtechnischen Mitteln gefertigt wurden, resultiert aus dieser Methode ein hochpräzises, jedoch billig und in großen Stückzahlen zu fertigendes Bauteil.

## Beschreibung

### Stand der Technik

Die Erfindung geht aus von einem Verfahren zur Herstellung eines mikrostrukturierten Körpers, einem mikrostrukturierten Körper, einem Verfahren zur Herstellung eines Gußrahmens, einem Gußrahmen, einem Verfahren zur Herstellung eines integriert-optischen Bauteils und einem integriert-optischen Bauteil nach dem Oberbegriff der unabhängigen Ansprüche.

Aus der WO 94/08236 ist ein Verfahren zur Herstellung mikrostrukturierten Körpers in Gestalt eines Deckels für eine integriert-optische Schaltung bekannt. Dabei wird ein optisches Bauelement in einen Formstempel eingelegt, welcher Justierelemente aufweist. Beim Einlegen wird das optische Bauelement mittels der Justierelemente auf dem Formstempel justiert. Durch Gießen einer aushärtbaren Flüssigkeit um das optische Bauelement herum wird ein Deckel, welcher das optische Bauelement enthält, hergestellt. Beim Gießverfahren handelt es sich um ein Spritzguß- oder Spritzprägeverfahren, bei dem die aushärtbare Flüssigkeit unter Druck und/oder Temperatureinwirkung in eine gewünschte Form gebracht und ausgehärtet wird. Die aushärtbare Flüssigkeit weist bei diesem Verfahren eine hohe Viskosität auf, die zwar relativ exakte Außenabmessungen des entstehenden optischen Bauelements zuläßt, aber bezüglich der Abformbarkeit Grenzen setzt.

In der DE-P 44 34 832.0 ist ein Verfahren zur Herstellung eines mikrostrukturierten Körpers als integriert-optisches Deckelbauteil beschrieben, bei dem ein vorgefertigter, trogförmiger Behälter als Außenumrandung für das entstehende Deckelbauteil fungiert, indem dieser Behälter auf einen Formstempel aufgesetzt wird und eine Reaktionsgußmasse in den Behälter eingegossen wird. Der Behälter besteht dabei vorzugsweise aus einem Kunststoff, wie beispielsweise Polycarbonat, und ist als Spritzgußteil herstellbar.

In der DE-P 19 517 087.3 ist ein Gußrahmen beschrieben, der als Außenumrandung für einen herzustellenden mikrostrukturierten Körper dient und der beim Aufsetzen auf einen Formstempel mit wenigstens einem Rastelement in den Formstempel einrastet. Durch dieses Einrasten geschieht eine Justierung des Gußrahmens auf dem Formstempel, welche bei der Herstellung des mikrostrukturierten Körpers den Vorteil bietet, daß die Mikrostrukturierung des mikrostrukturierten Körpers bezüglich der Lage des Gußrahmens in einer stets gleichbleibenden Position angeordnet ist. Der dort beschriebene Gußrahmen ist ebenfalls im Spritzgußverfahren herstellbar.

### Vorteile der Erfindung

Das erfindungsgemäße Verfahren zur Herstellung eines mikrostrukturierten Körpers sowie eines Gußrahmens mit den Merkmalen der unabhängigen Ansprüche hat demgegenüber den Vorteil, daß eine präzise definierte Außenkontur für die weitere Verwendung des mikrostrukturierten Körpers zur Verfügung steht, da sowohl für die Herstellung des Gußrahmens als auch für die Herstellung des mikrostrukturierten Körpers selbst auf Methoden der Mikrostrukturtechnik zurückgegriffen wird. Aufgrund der geringen Viskosität vieler aushärtbarer, fließfähiger Massen, insbesondere von Reaktionsgußmassen und der damit verbundenen guten Kriechfähigkeit ist eine äußerst präzise Abformung von einem mit Erhebungen mit nahezu beliebig komplizierter Anordnung von Hohlräumen versehenen Formstempeln erreichbar. Zudem weist der so hergestellte mikrostrukturierte Körper eine hohe Planarität an der Unterseite auf. Außerdem ist eine Reaktionsgußmasse als aushärtbare, fließfähige Masse in Entwicklung und Herstellung für Kleinserien billiger als vergleichbare Spritzgußmassen. Außerdem hat die Verwendung einer Reaktionsgußtechnik den Vorteil, daß keine hohen mechanischen Kräfte auf den mikrostrukturierten Körper oder die auszuhärtende, fließfähige Masse beim Herstellungsvorgang wirken, wodurch eine Verschiebung des Gußrahmens relativ zur zweiten Bodenformplatte aufgrund der mechanischen Kräfte nahezu ausgeschlossen ist. Ebenso ist damit die Gefahr der Verschiebung von einlegbaren elektrischen, optischen oder elektrooptischen Bauelementen verringert.

Durch die in den abhängigen Ansprüchen aufgeführten Maßnahmen sind vorteilhafte Weiterbildungen der in den unabhängigen Ansprüchen angegebenen Verfahren möglich.

Das Erhitzen der zweiten Bodenformplatte zur Einleitung des Reaktionsvorgangs ist deswegen vorteilhaft, weil die als Reaktionsgußmasse ausgebildete aushärtbare, fließfähige Masse dadurch vom Formstempel aus erhitzt wird, wo deshalb das Polymerisieren der aushärtbaren, fließfähigen Masse zuerst erfolgt. Dies ergibt eine präzise Struktur genau dort, wo die größte Genauigkeit erforderlich ist.

Das Erhitzen der zweiten Bodenformplatte von ihrer Unterseite her in großflächiger Form bringt den Vorteil mit sich, daß ein annähernd ebener Temperaturverlauf in etwa parallel zur Oberfläche der zweiten Bodenformplatte erzeugt wird, wodurch ein äußerst homogener Reaktionsvorgang an der Oberfläche der zweiten Bodenformplatte erzeugt wird, was die Genauigkeit und Planarität des Deckelbauteils erhöht.

Die Auswahl eines ferromagnetischen Materials für die zweite Bodenformplatte und deren Auflegen auf eine Trägerplatte, wo die erste Bodenformplatte mittels eines Magnetfeldes gehaltert wird, erweist sich als vorteilhaft, da zur Halterung der ersten Bodenformplatte dann keine zusätzlichen mechanischen Halteelemente vorgesehen sein müssen.

Vertiefungen auf der Unterseite des mikrostrukturierten Körpers können in folgenden Prozeßschritten vorteilhaft zur Justierung verwendet werden. Sie können darüberhinaus zur Aufnahme eines Polymerklebstoffs dienen, so daß in den Vertiefungen optische Wellenleiter entstehen.

Die Justierung des Konturenrahmens zur Herstellung des Gußrahmens über wenigstens ein Rahmenjustierelement auf der ersten Bodenformplatte hat den Vorteil, daß eine aktive Justierung beispielsweise durch optische Verfahren nicht nötig ist, und daß eine hohe Justiergenauigkeit gewährleistet ist.

Das Versehen des Einsatzelements zur Herstellung des Gußrahmens mit wenigstens einem Loch, in dem wenigstens ein Trägerelement entsteht, bietet den besonderen Vorteil, daß ein Gußrahmen mit einem Trägerelement herstellbar ist, welches zur Halterung von elektrischen, optischen oder elektrooptischen Bauelementen dienen kann. Außerdem erhöht das Trägerelement die Stabilität des Gußrahmens.

Das Aufbringen wenigstens eines elektrischen, optischen oder elektrooptischen Bauelements auf dem Trägerelement eröffnet dem mit Hilfe des Gußrahmens hergestellten mikrostrukturierten Körpers den Einsatzbereich der integrierten Optik, wobei das Trägerelement die Halterung des elektrischen, optischen oder elektrooptischen Bauelements übernimmt.

Das Anordnen wenigstens einer durchgehenden Kerbe auf der Oberseite des Einsatzelements ist ein vorteilhafte Ausgestaltung, da durch Ausgießen der Kerbe entsprechende Streben für den Gußrahmen entstehen, die dessen Stabilität erhöhen.

Das Erzeugen von Nuten im Gußrahmen bringt den Vorteil, daß die Nuten für vielseitige Anwendungen, wie beispielsweise als Justierelemente einsetzbar sind.

Ebenso wird die Funktionssicherheit des herzustellenden mikrostrukturierten Körpers erhöht, wenn die Gefahr eines Verrutschens einer verfestigten aushärtbaren fließfähigen Masse zum Boden des Gußrahmens hin durch eine Hilfsstruktur verringert wird.

Besonders vorteilhaft ist es außerdem, die Vertiefung in der ersten Bodenformplatte zusammen mit einer in etwa identischen Vertiefung in der zweiten Bodenformplatte herzustellen, die bei der Herstellung des mikrostrukturierten Körpers als Formstempel dient, da dadurch gleiche Masken für die beiden Vertiefungen einsetzbar sind. Außerdem wird die Präzision des entstehenden mikrostrukturierten Körpers vorteilhaft erhöht, da sich die zugehörigen Prozeßparameter in gleicher Weise auf die Abmessungen beider Vertiefungen ausgewirkt haben und der Gußrahmen dann besonders exakt in die wannenförmige Vertiefung eingreifen kann.

### Zeichnung

Ausführungsbeispiele der Erfindung sind in der Zeichnung dargestellt und in der nachfolgenden Beschreibung näher erläutert.

Es zeigen:
Figur 1 a-d eine Übersicht über das Fertigungsverfahren für den mikrostrukturierten Körper,
Figur 2 eine perspektivische Ansicht einer ersten Bodenformplatte,
Figur 3a eine perspektivische Ansicht eines Einsatzelements,
Figur 3b eine perspektivische Ansicht eines Konturenrahmens,
Figur 4a eine Draufsicht auf eine Anordnung mit einer ersten Bodenformplatte, einem Konturenrahmen und einem eingelegten Einsatzelement,
Figur 4b eine perspektivische Ansicht derselben Anordnung,
Figur 5a eine perspektivische Ansicht eines Gußrahmens,
Figur 5b eine Draufsicht auf die Unterseite eines Gußrahmens mit einem Heizelement,
Figur 5c eine aufgeschnittene Seitenansicht desselben Gußrahmens,
Figur 6 eine perspektivische Ansicht der zweiten Bodenformplatte,
Figur 7 eine aufgeschnittene Seitenansicht auf einen Gußrahmen, der im Formstempel eingelegt ist,
Figuren 8 a-d ein Verfahren zur Herstellung einer ersten oder einer zweiten Bodenformplatte,
Figur 9 einen Schnitt durch eine Gußvorrichtung mit einem auf einem Formstempel aufgesetzten Gußrahmen und mit einem elektrooptischen Bauelement,
Figur 10a eine perspektivische Ansicht eines mikrostrukturierten Körpers,
Figur 10b eine Draufsicht auf die Unterseite eines mikrostrukturierten Körpers,
Figur 11 eine perspektivische Ansicht eines Einsatzelements zur Herstellung eines taperförmigen, optischen Polarisators,
Figur 12 eine aufgeschnittene Seitenansicht auf einen Gußrahmen mit einem Trägerelement mit variablem Dickenverlauf.

### Beschreibung der Ausführungsbeispiele

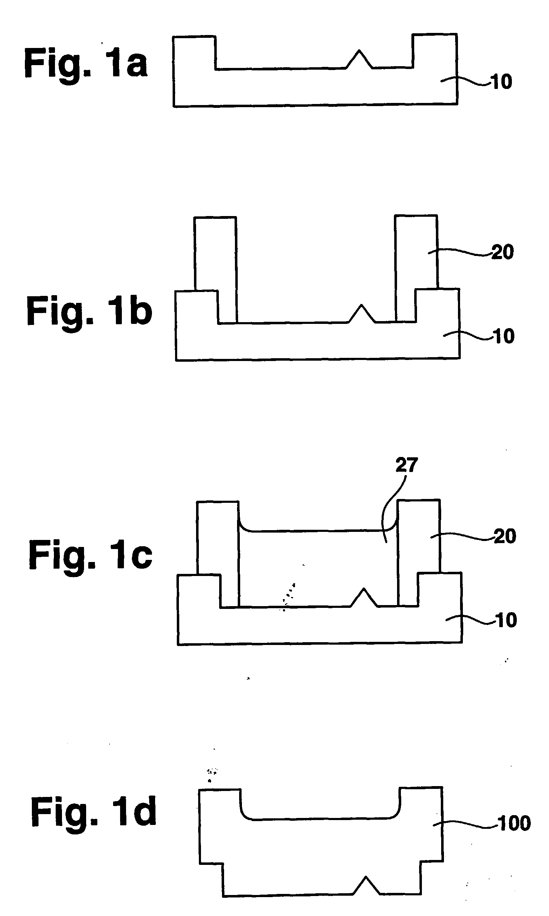

In den Figuren 1a bis 1d wird ein Verfahren zur Herstellung eines mikrostrukturierten Körpers dargestellt.

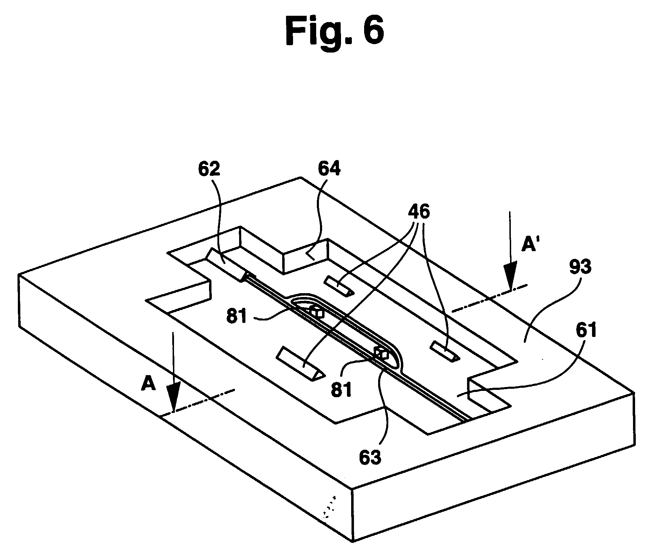

Figur 1a zeigt den Querschnitt durch einen Formstempel 10, der in der folgenden Beschreibung auch zweite Bodenformplatte genannt wird. Der Formstempel weist auf seiner Oberfläche eine Strukturierung auf, auf welche in der Beschreibung der folgenden Figuren, insbesondere Figuren 6-8, noch näher eingegangen werden wird.

In einem zweiten Schritt wird auf den Formstempel 10 ein Gußrahmen 20 aufgesetzt. Der Formstempel 10 bildet zusammen mit dem Gußrahmen 20 einen nach oben offenen Behälter, wie es Figur 1b zeigt.

Dieser Behälter aus Formstempel 10 und Gußrahmen 20 wird in einem weiteren Schritt mit einer aushärtbaren, fließfähigen Masse 27 befüllt. Nach der Befüllung härtet die aushärtbare, fließfähige Masse 27 aus. Figur 1c zeigt den Behälter nach der erfolgten Befüllung.

Auf die Aushärtung folgt die Entformung, wobei die Mikrostruktur vom Formstempel 10 gelöst wird. Der Gußrahmen 20, welcher anfangs Bestandteil des als Gußform benutzten nach oben offenen Behälters war, hat sich mit der ausgehärteten aushärtbaren, fließfähigen Masse 27 verbunden und ist nun Teil des mikrostrukturierten Körpers 100. Dieser mikrostrukturierte Körper ist in Figur 1d gezeigt. Durch die Herstellung sowohl des Gußrahmens 20 als auch des Formstempels 10 mit mikrostrukturtechnischen Methoden läßt sich eine besonders präzise Formgebung sowohl an der Unterseite als auch an den Seitenflächen des mikrostrukturierten Körpers 100 erreichen.

Mikrostrukturtechnische Methoden im hier verwendeten Sinne sind Verfahren zur Bearbeitung und Formgebung von Materialien, bei welchen zur Formgebung mindestens ein Lithographieschritt vorgesehen ist, wobei die Lithographie auch mit Röntgenstrahlen, Laser oder ultraviolettem Licht durchgeführt werden kann.

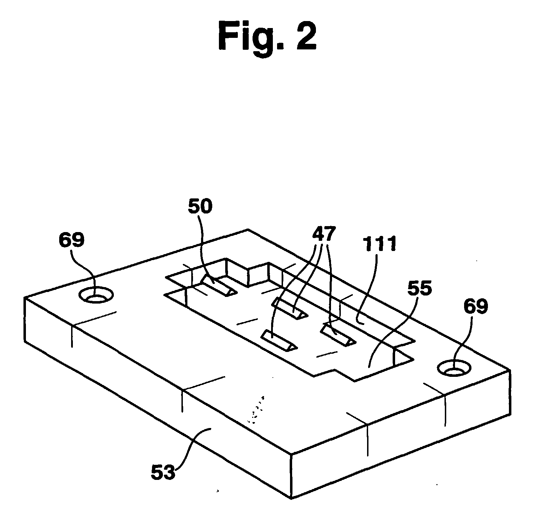

Im folgenden wird nun das in den Figuren 1a bis 1c vorgestellte Verfahren anhand von Ausführungsbeispielen näher erläutert. Hierbei wird anhand der Figuren 2 bis 5 die Herstellung des Gußrahmens 20 gezeigt, Figuren 6 bis 9 geben die Herstellung des mikrostrukturierten Körpers 100 wieder.

In Figur 2 ist eine erste Bodenformplatte 53 dargestellt, die in einem Verfahren zur Herstellung des Gußrahmens 20 Anwendung findet. Die erste Bodenformplatte 53 ist dazu als flache, in etwa quaderförmige Platte ausgebildet, in der eine Vertiefung 55 mit einer Wand 111 angeordnet ist. Sie besitzt eine rechteckige Grundform, an deren schmale Stirnseiten zwei rechteckige Ansatzformstücke angrenzen, die die Schmalseiten der Vertiefung 55 bilden. In der Vertiefung 55 sind außerdem mehrere Erhebungen 47, 50 angeordnet. Davon sind zwei dachfirstförmige Platzhaltererhebungen 50 in Flucht miteinander jeweils in etwa entlang der Längsachse der Vertiefung 55 angeordnet. Außerdem sind drei dachfirstförmige Prägeerhebungen 47 vorgesehen, von denen zwei in ihrer Firstlinie fluchten, und die dritte dachfirstförmige Prägeerhebung 47 zu den beiden anderen dachfirstförmigen Prägeerhebungen 47 versetzt und in etwa mittig zu dem Zwischenraum zwischen den beiden anderen dachfirstförmigen Prägeerhebungen 47 angeordnet ist. Die Firstlinien aller drei Prägeerhebungen 47 verlaufen parallel zu der Firstlinie der dachfirstförmigen Platzhaltererhebungen 50.

Die erste Bodenformplatte 53 weist zudem ein Rahmenjustierelement 69 auf, welches in Form einer zylindrischen Vertiefung neben der Vertiefung 55 in der ersten Bodenformplatte 53 ausgebildet ist. Sämtliche Erhebungen 47, 50 sind nur beispielhaft zu sehen. Es ist ebenso vorgesehen, andere Anordnungen und Formgebungen einzusetzen.

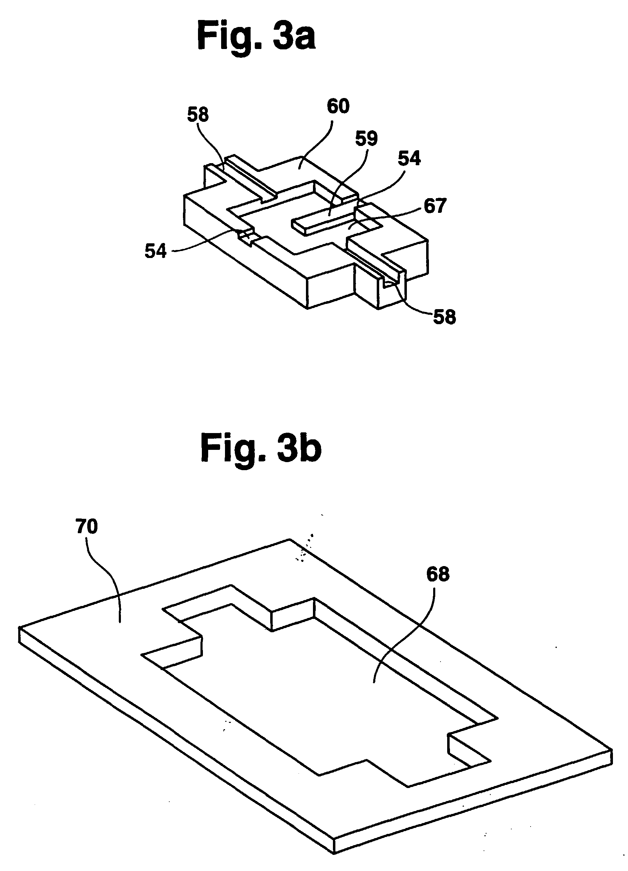

Zur Herstellung des Gußrahmens 20 wird außer der ersten Bodenformplatte 53 ein Einsatzelement 60 benötigt, welches in Figur 3 a dargestellt ist. Das Einsatzelement 60 weist im wesentlichen eine Quaderform mit einer längeren und einer kürzeren Seite auf. An den kürzeren Seiten sind zwei Erweiterungen mit in etwa quadratischem Grundriß angebracht. In etwa parallel zur längeren Seite verläuft an der Oberseite eine in ihrem Querschnitt gleichfalls quaderförmige Längskerbe 58 und in etwa parallel zur kürzeren Seite des Einsatzelements 60 an der Oberseite eine in ihrem Querschnitt quaderförmige Querkerbe 54. In etwa senkrecht zu den beiden Kerben 54, 58 ist in dem Einsatzelement 60 ein U-förmiges Loch 67 angeordnet, welches das Einsatzelement 60 von der Oberseite zur Unterseite hin durchdringt. Dadurch ragt eine Zunge 59 in den Innenraum des Einsatzelements 60.

Weiterhin wird zur Herstellung des Gußrahmens 20 neben der ersten Bodenformplatte 53 und dem Einsatzelement 60 ein Konturenrahmen 70 benötigt, welcher in Figur 3 b dargestellt ist. Der Konturenrahmen 70 ist in Form einer flachen Scheibe ausgebildet, in der ein Durchbruch 68 angeordnet ist. Der Durchbruch 68 weist hierbei die gleiche Form auf, wie die Vertiefung 55 in der ersten Bodenformplatte 53. Jedoch sind die lateralen Abmessungen des Durchbruchs 68 in diesem Beispiel größer gewählt als die der Vertiefung 55. Der Konturenrahmen 70 besitzt auf der Unterseite zwei zylinderförmige Rasterhebungen 99, welche in der perspektivischen Darstellung in Figur 3 b nicht sichtbar sind. Sie haben relativ zu den Achsen des Durchbruchs 68 dieselbe Entfernung, wie die Rahmenjustierelemente 69 relativ zu den Achsen der Vertiefung 55 der ersten Bodenformplatte 53.

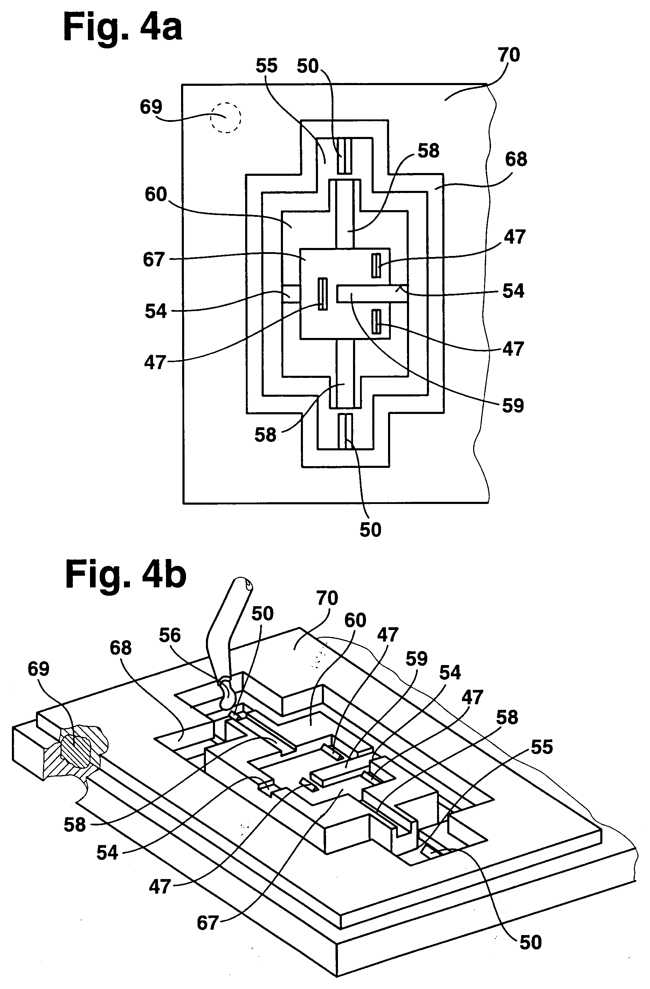

Das so ausgestaltete Einsatzelement 60 wird in die Vertiefung 55 der ersten Bodenformplatte 53 eingelegt und durch Punktschweißen, Verschrauben fixiert, wie es in den Figuren 4 a und b dargestellt ist. Die Numerierung aus den Figuren 1 bis 3 wurde dabei beibehalten. Außer dem Einsatzelement 60 wird auf die erste Bodenformplatte 53 der Konturenrahmen 70 aufgelegt und fixiert, der, wie oben beschrieben und in Figur 3 b dargestellt, in Form einer flachen Scheibe mit einem Durchbruch 68 ausgebildet ist. Der Durchbruch 68 weist hierbei die gleiche Form auf, wie die Vertiefung 55 in der ersten Bodenformplatte 53, jedoch mit größeren Abmessungen des Durchbruchs 68 als die der Vertiefung 55, so daß nach dem Aufsetzen des Konturenrahmens 70 auf die erste Bodenformplatte 53 im Durchbruch 68 eine entlang der Innenwandung des Durchbruchs 68 verlaufende Stufe entstanden ist. Der Konturenrahmen 70 rastet mittels der Rasterhebung 99, vorzugsweise verdrehsicher, in dem Rahmenjustierelement 69 der ersten Bodenformplatte 53 ein. Das Einsatzelement 60 ist seinerseits so dimensioniert, daß seine Außenwände innerhalb der Vertiefung 55 zu liegen kommen, und zwar dergestalt, daß zwischen den Außenwandungen des Einsatzelementes 60 und der Innenwand der Vertiefung 55 ein rund um das Einsatzelement 60 verlaufender Spalt verbleibt. Die Zunge 59 des Einsatzelementes 60 kommt hierbei zwischen den drei dachfirstförmigen Prägeerhebungen 47 zu liegen. Die Längskerbe 58 fluchtet in etwa mit der Firstlinie der dachfirstförmigen Platzhaltererhebungen 50.

Wie in Figur 4 b gezeigt, wird in diese Anordnung eine aushärtbare, fließfähige Gußrahmenmasse 56 eingefüllt, die in sämtliche Aussparungen, insbesondere auch in das Loch 67, eindringt. Die Füllhöhe wird genau so gewählt, daß das Loch 67 und die Kerben 58, 59 noch gefüllt werden, aber die Oberfläche des Einsatzelements 60 nicht mehr benetzt wird. Daraufhin erfolgt ein Aushärtvorgang, bei dem die aushärtbare, fließfähige Gußrahmenmasse 56 zu einem festen Gebilde erstarrt. Nach dem Entformen des erstarrten Gebildes von Konturenrahmen 70, erster Bodenformplatte 53 und Einsatzelement 60 ist als Gebilde ein Gußrahmen 20 entstanden. Der so entstandene Gußrahmen 20 weist, wie bereits beschrieben, das Trägerelement 80 auf.

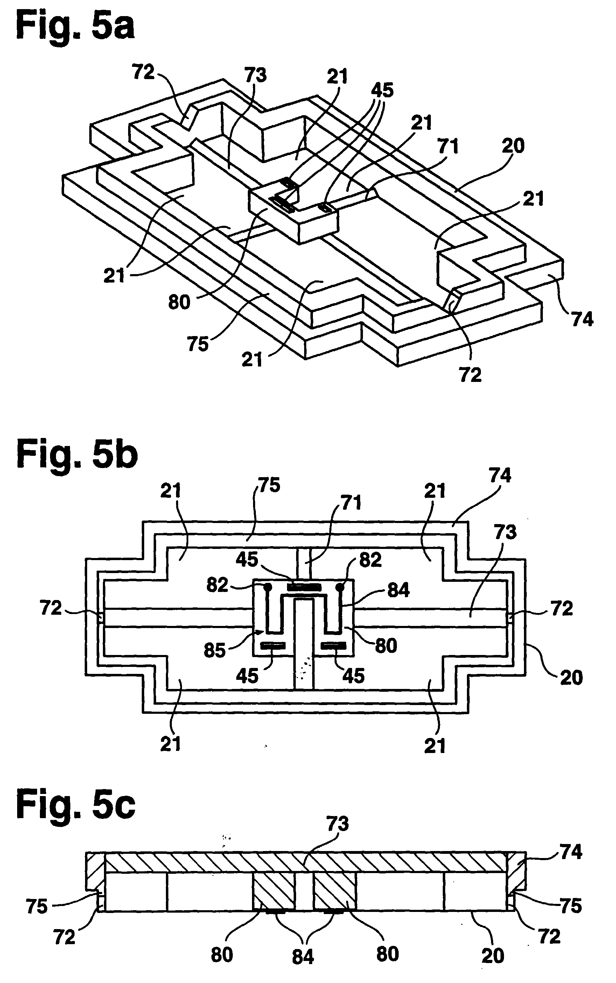

In Figuren 5 a-c ist ein Gußrahmen 20 dargestellt, wie er durch den in den vorhergehenden Figuren 2-4 beschriebenen Gußvorgang erzeugt wird. Figur 5a zeigt eine perspektivische Darstellung des Gußrahmens 20. Figur 5b zeigt eine Ansicht von unten, also auf die Seite, welche durch Abformung der Vertiefung 55 der ersten Bodenformplatte 53 entstanden ist. Figur 5c zeigt einen aufgeschnittene Seitenansicht entlang der in Figur 5b dargestellten gestrichelten Linie. Auf die in Figur 5b und 5c dargestellten Gußrahmen wurde außerdem in einem weiteren Schritt eine Leiterstruktur aufgebracht, welche unten näher beschrieben werden wird.

Der Gußrahmen 20 weist die Form eines quaderförmigen, länglichen Rahmens auf, der an seinen Schmalseiten jeweils in ein quaderförmiges Ansatzrahmenstück übergeht. Die in Querrichtung zu den längeren Seiten des quaderförmigen, länglichen Rahmens verlaufenden Seiten der quaderförmigen Ansatzrahmenstücke sind in diesem Beispiel etwas kürzer als die Schmalseiten des quaderförmigen, länglichen Rahmens.

Andere Ausgestaltungen der Außenkontur des Gußrahmens 20 sind aber ebenfalls möglich und vorgesehen. Der Gußrahmen 20 ist in seinem Innenraum hohl, so daß er lediglich eine entlang der Außenlinien des quaderförmigen, länglichen Rahmens und der quaderförmigen Ansatzrahmenstücke verlaufende Wandung 74 aufweist. Die Wandung 74 weist an ihrer Oberseite auf ihrem inneren Rand einen rundumlaufenden Absatz auf, der als Rastelement 75 dient. Lediglich an den Stirnseiten der quaderförmigen Ansatzstücke des Gußrahmens 20 weist das Rastelement 75 je eine in Form einer invers-dachfirstförmigen Kerbe geformte Lippennut 72 auf. Das Rastelement 75 wird im weiteren auch als Lippe bezeichnet. Im Inneren des Gußrahmens 20 sind zur Verbesserung der Stabilität eine entlang der Längsrichtung des Gußrahmens 20 verlaufende Längsstrebe 73 und zwei quer dazu verlaufende Querstreben 71 angeordnet. Die Zwischenräume zwischen den Streben 71, 73 stellen Einfullöffnungen 21 dar. An einem der beiden Kreuzungspunkte zwischen einer der Querstreben 71 und der Längsstrebe 73 ist ein U-förmiges Trägerelement 80 angeordnet. Das Trägerelement 80 hat einen in etwa rechteckigen Querschnitt. Die beiden Schenkel des U-förmigen Trägerelements 80 sind hier beispielhaft parallel zu den Streben 71, 73 angeordnet.

Das Trägerelement 80 entsteht als Abguß des Lochs 67. Bei der Fertigung des mikrostrukturierten Körpers erlangt es Wichtigkeit, da es zur Halterung eines elektrischen, optischen oder elektrooptischen Bauelements dient. In Figur 5b und c sind Ansichten des Gußrahmens 20 gezeigt, bei dem bereits nach dem Gießen auf das Trägerelement 80 ein elektrooptisches Bauelement in Form eines Heizelements 85 aufgebracht wurde. Das Heizelement 85 weist hierzu eine mäanderförmige Heizschleife 84 auf, an deren beiden Enden je ein Anschlußkontakt 82 angeordnet ist.

Es ist zu erkennen, daß in vorteilhafter Weise das Trägerelement 80 dem später darauf aufzubringenden elektrischen, optischen oder elektrooptischen Bauelement 85 angepaßt wurde, um ein Minimum an Gußrahmenmasse 56 zu verbrauchen und gleichzeitig eine gute Aushärtbarkeit und Entformbarkeit für das Trägerelement 80 sicherzustellen. Die Gestaltung des Trägerelements 80 ist jedoch prinzipiell frei wählbar. Außerdem sind im Trägerelement 80 inversdachfirstförmige Trägerelementnuten 45 zu erkennen, die durch Abformung der dachfirstförmigen Prägeerhebungen 47 entstanden sind. Die invers-dachfirstförmigen Lippennuten 72 sind ebenfalls durch Abformung der dachfirstförmigen Platzhaltererhebungen 50 entstanden. Die Streben 71, 73 entstanden aus den Kerben 54, 58. Die Lippe 75 ist aufgrund des Größenunterschieds zwischen der Aussparung 68 im Konturenrahmen 70 und der Vertiefung 55 entstanden.

Der so mit dem elektrooptischen Bauelement 85 versehene Gußrahmen 20 wird im folgenden zur Herstellung eines mikrostrukturierten Körpers eingesetzt werden. Der bisher beschriebene Gußrahmen 20 bildet eine Komponente der hierfür benötigten Gußform.

Ein weiterer Bestandteil der Gußform für die Herstellung des mikrostrukturierten Bauteils ist in Figur 6 dargestellt. Hierbei handelt es sich um eine zweite Bodenformplatte 93, die einen Formstempel 10 bildet. Die zweite Bodenformplatte 93 weist eine wannenförmige Vertiefung 61 auf, deren äußerer Grundriß und deren laterale Abmessungen identisch sind mit der äußeren Form und den lateralen Abmessungen der Vertiefung 55 der ersten Bodenformplatte 53. Die wannenförmige Vertiefung 61 weist eine Wandung 64 auf, die als Gegenrastelement dient. Im Inneren der wannenförmigen Vertiefung 61 sind entlang deren Längsachse, jeweils am Ende der wannenförmigen Vertiefung 61 zwei dachfirstförmige Faserjustiererhebungen 62 angeordnet, von welchen, wegen der perspektivischen Darstellung, in Figur 6 nur eine zu sehen ist. Außerdem sind drei dachfirstförmige Rahmenjustiererhebungen 46 vorgesehen, von denen zwei in ihrer Firstlinie fluchten, wobei die Firstlinien aller drei Rahmenjustiererhebungen 46 parallel zu der Firstlinie der dachfirstförmigen Platzhaltererhebungen 50 verlaufen. Die dritte dachfirstförmige Rahmenjustiererhebung 46 ist zu den beiden anderen dachfirstförmigen Rahmenjustiererhebungen 46 versetzt und ist in etwa mittig zu dem Zwischenraum zwischen den beiden anderen dachfirstförmigen Rahmenjustiererhebungen 46 angeordnet. Die drei dachfirstförmigen Rahmenjustiererhebungen 46 und die zwei dachfirstförmigen Faserjustiererhebungen 62 entsprechen in ihrer Lage den drei dachfirstförmigen Prägeerhebungen 47 und den zwei dachfirstförmigen Platzhaltererhebungen 50 in der Vertiefung 55 der ersten Bodenformplatte. 62 und 50 haben in etwa gleiche Abmessungen, 46 dagegen muß definiert um jenes Maß höher sein als 47, welches später am fertigen Bauteil den Abstand des elektrischen optischen Bauteils vom Wellenleiter/Oberkante bestimmt.

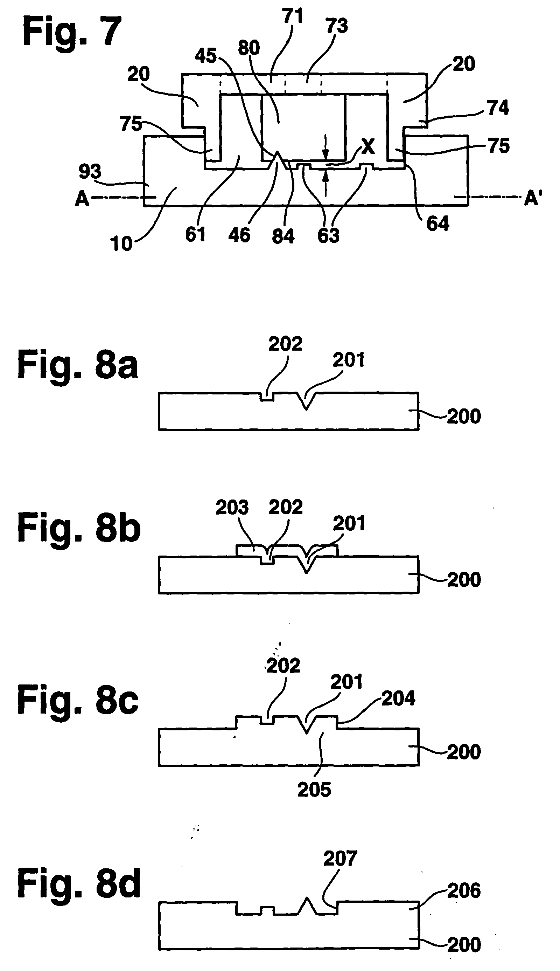

Zwischen den zwei dachfirstförmigen Faserjustiererhebungen 62 verläuft eine quaderförmige Erhebung 63. Die quaderförmige Erhebung 63 besteht aus einem Hauptarm, welcher eine geradlinige Verbindung zwischen den beiden dachfirstförmigen Faserjustiererhebungen 62, sowie einem Bypass-Arm, welcher von dem Hauptarm bei dessen Verbindung mit der einen dachfirstförmigen Faserjustiererhebung 62 abzweigt, parallel zu dem Hauptarm zwischen den beiden fluchtenden dachfirstförmigen Rahmenjustiererhebungen 46 auf der einen Seite und der einzeln stehenden dachfirstförmigen Rahmenjustiererhebung 46 auf der anderen Seite hindurchführt, und sich bei der Verbindung des Hauptarms mit der anderen dachfirstförmigen Faserjustiererhebung 62 wieder mit dem Hauptarm vereint. Links und rechts von der einzeln stehenden dachfirstförmigen Rahmenjustiererhebung 46, ist, in der Verlängerung der Firstlinie, noch je eine würfelförmige Erhebung 81 angeordnet. Die zweite Bodenformplatte 93 weist, aus Gründen, welche noch offenbart werden werden, im Gegensatz zu der ersten Bodenformplatte 53 kein Rahmenjustierelement 69 auf. Weiterhin weist die Darstellung in Figur 6 eine Linie AA' auf, welche als Schnittlinie für die Schnittzeichnung in Figur 7 dient.

Der Gußrahmen 20 wird nun auf den Formstempel 10 aufgesetzt, so daß die beiden Teile sich zu einer Gußform verbinden. Dies wird beispielhaft in der Querschnittsdarstellung in Figur 7 gezeigt. Hierbei wurde der Gußrahmen 20, wie er in Figur 5a und 5b dargestellt wurde, auf die in Figur 6 dargestellte zweite Bodenformplatte 93 aufgesetzt. Die Anordnung wurde entlang einer Ebene, welche senkrecht auf dem Hauptarm der quaderförmigen Erhebung 63 steht, und die Linie AA' aus Figur 6 einschließt, aufgeschnitten.

Der Gußrahmen 20 wird mit der Lippe 75 nach unten auf den Formstempel 10 aufgesetzt, wobei die Lippe 75 dichtend innerhalb des Gegenrastelements 64 einrastet. Beim Auflegen des Gußrahmens 20 auf die wannenförmige Vertiefung 61 gelangen die invers-dachfirstförmigen Trägerelementnuten 45 in Eingriff mit den dachförmigen Rahmenjustiererhebungen 46, so daß eine hochpräzise Justierung des Trägerelements 80 und eines darauf aufgebrachten elektrischen, optischen oder elektrooptischen Bauelements bezüglich der wannenförmigen Vertiefung 61 erfolgt. Im hier gezeigten Ausführungsbeispiel wird das Trägerelement so fixiert, daß die darauf angebrachte Heizschleife 84 über dem Hauptarm der quaderförmigen Erhebung 63, nicht jedoch über dem Bypass-Arm zu liegen kommt. Die Querstrebe 71 und die Längsstreben 73 des Gußrahmens 20 unterstützen die Dichtung zwischen Lippe 75 und Gegenrastelement 64, indem sie ein Einknicken des Gußrahmens 20 verhindern.

Es ist möglich, daß durch Druck auf dem Gußrahmen 10 dieser sich geringfügig im Außenbereich verbiegt, so daß die Lippe 75 etwas tiefer in das Gegenrastelement 64 einrastet.

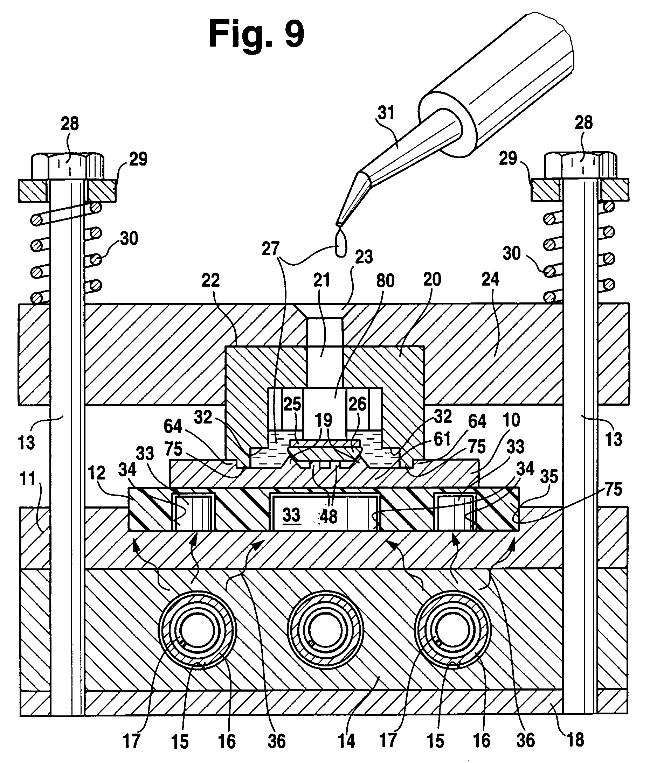

Die in Figur 7 dargestellte Vorrichtung stellt eine Gußform zum Herstellen eines mikrostrukturierten Körpers dar. Zum Gießen wird, wie im Zusammenhang mit Figur 9a noch genauer beschrieben werden wird, eine aushärtbare Flussigkeit, vorzugsweise eine Reaktionsgußmasse, in den Innenraum dieser Gußform gegossen und dort ausgehärtet. Nach dem Aushärten und Entformen vom Formstempel 10 entsteht somit ein mikrostrukturierter Körper, an dessen Unterseite ein Negativabdruck der Oberfläche in der wannenförmigen Vertiefung 61 des Formstempels 10 vorhanden ist, und dessen integraler Bestandteil der frühere Gußrahmen 20 nun geworden ist.

Es ist an dieser Stelle zweckmäßig, vor der Beschreibung der Herstellung des mikrostrukturierten Körpers einen Weg zur Herstellung der ersten Bodenformplatte 53 und der zweiten Bodenformplatte 93 zu beschreiben. Dies geschieht anhand der Figuren 8 a-d

Zweckmäßigerweise wird eine ursprüngliche Mikrostruktur, welche im folgenden auch Master genannt werden wird, aus einem einkristallinen Siliziumsubstrat 200 hergestellt. Andere Materialien sind jedoch ebenfalls vorgesehen. Dachförmige Strukturen 201 können beispielsweise durch anisotropes Ätzen und Strukturen mit etwa senkrecht zur Substratoberfläche angeordneten Wänden 202 können beispielsweise durch Ionenätzen erzeugt werden. Eine beispielhafte Struktur ist in Figur 8a zu sehen.

In Figur 8b ist die Struktur aus Figur 8a mit einer Schutzschicht 203 bedeckt.

Die Anordnung aus Figur 8b wird wiederum geätzt, so daß der geschützte Teil nach Entfernen der Schutzschicht erhaben ist und eine Mesawand 204 aufweist, wie Figur 8c zeigt. Die in Figur 8c gezeigte Struktur ist die Master-Struktur.

Durch Abformen des Masters 205 entsteht der erste Negativabdruck 206 des Masters, welcher in Figur 8d gezeigt ist. Insbesondere entsteht eine Abdruckwand 207 als Abformung der Mesawand 204. Beim Abformen geht jedoch in der Regel die Master-Struktur verloren. Der erste Negativabdruck 206 kann jedoch durch zweimaliges Abformen des ersten Negativabdrucks 206 vervielfältigt werden.

Bei der Herstellung der ersten Bodenformplatte 53 und der zweiten Bodenformplatte 93 mittels dieses Verfahrens ist vor allem darauf zu achten, daß die Vertiefung 55 und die wannenförmige Vertiefung 61 in ihren lateralen Abemessungen möglichst identisch sind. Dies ist beispielsweise gewährleistet, wenn die beiden Master-Strukturen mit einem gemeinsamen Photolithographieverfahren mit einer für beide Vertiefungen 55, 61 möglichst identischen Maske hergestellt wurden, oder wenn wenigstens die Masken für die beiden Vertiefungen im selben Schritt hergestellt wurden. Mit diesen Maßnahmen ist gewährleistet, daß der Gußrahmen 20 und der Formstempel 10 sich lateral formschlüssig zu einer Gußform verbinden lassen. Der Lithographieschritt macht das beschriebene Verfahren zu einem mikrostrukturtechnischen Verfahren im Sinne der obengenannten Definition.

Ein besonders einfaches Zusammenfügen zwischen Gußrahmen 20 und zweiter Bodenformplatte 93 ergibt sich, wenn bei der Herstellung der Masken Vorkehrungen getroffen werden, daß die Lage der Firstlinien der dachförmigen Prägeerhebungen 47 in der ersten Bodenformplatte und die Lage der Firstlinien der dachförmigen Rahmenjustiererhebungen 46 in der zweiten Bodenformplatte mit höchster Präzision übereinstimmen, ebenso wie die Dachwinkel. Wenn dabei die Höhe der dachförmigen Prägeerhebungen 47 in der ersten Bodenformplatte etwas geringer ist als die der dachfirstförmigen Rahmenjustiererhebungen 46 in der zweiten Bodenformplatte, ergibt sich zwischen dem elektrisch oder optisch ... Element ein mit Toleranzen < 1 µm genau definierter, vertikaler Abstand zur Oberfläche, das heißt zum optischen Wellenleiter, des ... strukturierenden Körpers. Der laterale Abstand ist gleichfalls durch Einrasten präzise bestimmt. Im hier gezeigten Ausführungsbeispiel sollte der Höhenunterschied mindestens einige Mikrometer größer sein als die Höhe der quaderförmigen Erhebungen 48. Die Mesawände 204 der Master-Exemplare für die erste und die zweite Bodenformplatte werden dann vorzugsweise gleich gewählt.

Hierdurch wird erreicht, daß beim Aufsetzen des Gußrahmens 20 auf die zweite Bodenformplatte 93 ersterer zuerst mit dem Rastelement 75 in der wannenförmigen Vertiefung 61 der zweiten Bodenformplatte 93 lateral fixiert wird. Bei weiterem Absenken des Gußrahmens 20 sitzen dann die inversdachförmigen Trägerelementnuten 45 formschlüssig auf den dachfirstförmigen Rahmenjustiererhebungen 46 in der zweiten Bodenformplatte auf, bevor andere Teile des Gußrahmens 20 den Boden der wannenförmigen Vertiefung 61 der zweiten Bodenformplatte 93 berühren. Hierdurch wird erreicht, daß die laterale und vertikale Positionierung des Trägerelements 80 mit einem eventuell darauf angebrachten Bauelement relativ zu den quaderförmigen Erhebungen 48 automatisch besonders genau wird. Darüberhinaus ist unter dem Gußrahmen 20 noch genug Bodenfreiheit für die quaderförmigen Erhebungen. Zur Veranschaulichung wird an dieser Stelle auf die Beschreibung von Figur 7 verwiesen.

Die Ätztiefe für V-Nuten ist jedoch am einfachsten bei durch anisotropes Ätzen hergestellten invers-dachförmigen Vertiefungen zu bestimmen, da hier die Tiefenbestimmung auf eine Bestimmung einer lateralen Abmessung zurückführbar ist, was besonders einfach ist. Dem Fachmann sind auch noch weitere Herstellungsprozesse für die erste und die zweite Bodenformplatte unter Verwendung der mit Hilfe von Figur 13 a-d beschriebenen Prozessschritte offensichtlich.

Im folgenden wird das Verfahren zur Herstellung des mikrostrukturierten Körpers am Beispiel eines integriertoptischen Deckelbauteils beschrieben. Hierbei kommt eine Gußform mit einem Formstempel 10, welcher von der zweiten Bodenformplatte 93 gebildet wird, und einem Gußrahmen 20 zum Einsatz, welche der beispielhaft in Figur 7 beschriebenen Gußform ähnelt, sowie eine Gußvorrichtung, wie sie in Figur 9 zu sehen ist und im folgenden beschrieben ist. Der verwendete Gußrahmen 20 weist in diesem Beispiel einen obenliegenden Boden auf, in dem nur eine einzige Einfüllöffnung 21 angeordnet ist.

In Figur 9 ist eine flache Bodenplatte 18 dargestellt, die zwei in etwa parallel zueinander und vertikal zur Bodenplatte 18 ausgerichtete Führungsstangen 13 aufweist. Weiter ist eine flache Grundplatte 14 vorgesehen, welche zwei Löcher aufweist, durch die die Führungsstangen 13 der Bodenplatte 18 ragen. Die Grundplatte 14 liegt mit ihrer Unterseite bündig auf der Oberseite der Bodenplatte 18 auf. Weiter ist eine flache Zwischenplatte 11 vorgesehen, welche ebenfalls zwei Löcher aufweist, durch die die Führungsstangen 13 ragen. Die Zwischenplatte 11 liegt mit ihrer Unterseite auf der Oberseite der Grundplatte 14. Die Grundplatte 14 weist in etwa parallel zu ihrer flachen Oberseite mehrere nebeneinanderliegende zylinderförmige Aussparungen 15 auf, wobei in jeder zylinderförmigen Aussparung 15 eine Hülse 16 mit einer darin angeordneten Drahtwendel 17 angeordnet ist. Beim Durchfließen elektrischen Stroms durch die Drahtwendeln 17 geben diese eine Wärmestrahlung 36 ab. Die Zwischenplatte 11 weist im Bereich zwischen den beiden Führungsstangen 13 auf ihrer Oberseite ein in etwa kreisförmige Vertiefung 35 auf, in die eine in etwa kreisscheibenförmige, flache Trägerplatte 12 einlegbar ist. Die Trägerplatte 12 liegt dabei annähernd paßgenau in der Vertiefung 35, wobei mehrere in der Trägerplatte 12 angeordnete Sacklöcher 34 mit ihrer Öffnung nach unten zur Zwischenplatte 11 zeigen. In den Sacklöchern 34 befinden sich mehrere Permanentmagnete 33. Auf der Oberseite der Trägerplatte 12 ist ein flacher Formstempel 10 angeordnet, der auf seiner Oberseite mehrere dachfirstförmige Erhebungen 19 und außerdem mehrere quaderförmige Erhebungen 48 aufweist. Auf den quaderförmigen Erhebungen 48 stützt sich ein elektrooptisches Bauelement 26 ab, dessen äußere Flanken an den dachfirstförmigen Erhebungen 19 anliegen. Weiter vorgesehen ist der Gußrahmen 20, dessen offene Seite nach unten, zum Formstempel 10 hin zeigt. Der Gußrahmen 20 liegt mit seiner durch die Stirnfläche seiner Seitenwände gebildeten Umrandung auf dem Formstempel 10 auf und ist mit dem Rastelement 75 in dem Gegenrastelement 64 des Formstempels 10 eingerastet, so daß der Formstempel 10 einen Boden für den Innenraum des Gußrahmens 20 bildet. Das Trägerelement 80 ragt von der Oberseite des Gußrahmens 20 zur Unterseite ddes Gußrahmens. Der mechanische Druck von der Gußrahmenunterseite muß so groß sein, daß 45 in 46 ??. Der Gußrahmen 20 ist in seinem Innenraum oberhalb der Oberfläche des Formstempels 10 wenigstens teilweise mit einer aushärtbaren, fließfähigen Masse 27 gefüllt. Als aushärtbare, fließfähige Masse 27 dient beispielsweise eine Reaktionsgußmasse. Die Reaktionsgußmasse 27 umschließt dabei das elektrooptische Bauelement 26. Der Gußrahmen 20 ist zu einem Teil in einer Halterungsaussparung 22 in einer flachen Deckelplatte 24 gehaltert. Der Gußrahmen 20 weist in seinem obenliegenden Boden die Einfüllöffnung 21 auf, welche mit einer Aussparung 23, welche in der Deckelplatte 24 angeordnet ist, fluchtet.

Die Deckelplatte 24 ist gleichfalls mittels zweier Bohrungen, durch die die Führungsstangen 13 ragen, über die Führungsstangen 13 geführt und wird über zwei Spiralfedern 30, welche um die Führungsstangen 13 herum angeordnet sind, nach unten gedrückt. Nach oben stützen sich die Spiralfedern 30 an je einer Anschlagplatte 29 ab, welche mit je einer Anpreßschraube 28 auf der Führungsstange 13 befestigt sind. Weiter ist eine Pipette 31 vorgesehen, mittels der die Reaktionsgußmasse 27 durch die Aussparung 23 und die Einfüllöffnung 21 in den Gußrahmen 20 einfüllbar ist. Der Gußrahmen 20 weist außerdem nahe der Umrandung in seinem Innenraum eine Hilfsstruktur 32 in Form eines an den Seitenwänden innen rundum laufenden Absatzes auf,

Der Gußrahmen 20 mit dem Trägerelement 80 und dem elektrooptischen Bauelement 26 wird zunächst in die Deckelplatte 24 eingelegt, so daß dessen Boden in der Halterungsaussparung 22 zu liegen kommt. Vorzugsweise ist die Halterungsaussparung 22 so ausgebildet, daß ein leichtes Klemmen des Gußrahmens 20 erfolgt. Der Gußrahmen 20 besteht vorzugsweise aus einem Kunststoff, wie beispielsweise Polyamid (PA) oder Polyoxymethylen (POM), welcher nicht unbedingt optisch transparent sein muß. POM oder PA sind besonders geeignet, da sich aufgrund der negativen Oberflächenspannung gegenüber der Reaktionsgußmasse (z.B. MMA) eine hohe Planarität der Abformfläche und eine relative Beweglichkeit zwischen Gußrahmen 20 und verfestigter Reaktionsgußmasse 27 ergibt. Weiter wird die beschriebene Anordnung zunächst soweit fertiggestellt, daß die Bodenplatte 18, die Grundplatte 14 und die Zwischenplatte 11 übereinander liegen. Ebenso wird die Trägerplatte 12 mit den in die Sacklöcher 34 eingelegten Permanentmagneten 33 in die Vertiefung 35 der Zwischenplatte 11 eingelegt.

Auf die Trägerplatte 12 wird dann der Formstempel 10 aufgelegt. Durch die Permanentmagnete 33 wird der Formstempel 10 in seiner Lage fixiert. Der Formstempel 10 wird dabei so ausgerichtet, daß er eine definierte Lage in bezug auf den später aufzusetzenden Gußrahmen 20 einnimmt. Dann wird die Deckelplatte 24 mit dem eingelegten Gußrahmen 20 mit der Öffnung des Gußrahmens 20 nach unten auf die Anordnung aufgesteckt, wobei die Führungsstangen 13 die mechanische Grobführung der Deckelplatte 24 übernehmen. Das Rastelement 75 und das Gegenrastelement 64 sorgen beim Aufeinandertreffen für die Justage zwischen Formstempel 10 und Gußrahmen 20. Dazu kann es vorgesehen sein, auch eine leichte laterale Bewegung, bzw. Rütteln auszuführen, bis ein Einrasten erfolgt und gegebenenfalls detektiert wird. Beim Aufsetzen des Gußrahmens 20 gerät das elektrooptische Bauelement 26 zwischen die dachfirstförmigen Erhebungen 19 und die quaderförmigen Erhebungen 48, wodurch mit leichtem Druck eine automatische passive Feinjustierung des elektrooptischen Bauelements 26 bezüglich des Formstempels 10 bewirkt wird. Durch Anbringen der Spiralfedern 30 zusammen mit den Anschlagplatten 29 und den Anpreßschrauben 28 wird die Deckelplatte 24 mit dem trogförmigen Behälter 20 in der eingerasteten Stellung auf die Oberfläche des Formstempels 10 gepreßt. Sodann wird durch die Aussparung 23 und die Einfüllöffnung 21 mittels der Pipette 31 die flüssige Reaktionsgußmasse 27 in den Innenraum des Gußrahmens 20 eingefüllt. Beim Einfließen der flüssigen Reaktionsgußmasse 27 in den Gußrahmen 20 wird jeder zugängliche Zwischenraum innerhalb des Gußrahmens 20 von der Reaktionsgußmasse 27 ausgefüllt. Die Reaktionsgußmasse 27 weist dazu vorzugsweise eine geringe Viskosität auf. Es ist dabei nicht notwendig, den Gußrahmen 20 ganz mit der Reaktionsgußmasse 27 zu füllen.

Diese Anordnung wird nun von unten her beheizt, indem elektrischer Strom durch die Drahtwendeln 17 geschickt wird. Dadurch erwärmen sich die Hülsen 16 und dann auch die gesamte Grundplatte 14. Die Wärmestrahlung 36 gelangt somit von unten durch die Grundplatte 14, die Zwischenplatte 11, die Trägerplatte 12 und den Formstempel 10 zu dessen Oberseite. Die Drahtwendeln 17 sind dabei vorzugsweise so gleichmäßig in der Grundplatte 14 verteilt, daß eine annähernd ebene Wärmestrahlung 36 von unten nach oben in Richtung auf den Formstempel 10 resultiert. Die flüssige Reaktionsgußmasse 27 besteht z.B. aus einem polymerisationsfähigen Monomer, welches mit Thermoinitiatoren vermischt ist. Durch die Thermoinitiatoren beginnt nun mit wachsender Temperatur ab einer gewissen Schwelltemperatur eine Polymerisation der Reaktionsgußmasse 27. Da die Wärmestrahlung 36 von unten an den Formstempel 10 geführt wird, beginnt die Polymerisation zuerst an der der Oberfläche des Formstempels 10 nächstgelegenen Fläche der Reaktionsgußmasse 27.

Vorzugsweise wird die Reaktionsgußmasse 27 dabei so zusammengesetzt, daß Thermoinitiatoren mit wenigstens zwei unterschiedlichen Temperaturschwellen darin enthalten sind. Dann genügt ein Beheizen der Anordnung bis zur ersten Temperaturschwelle, um zumindest ein teilweises Polymerisieren der Reaktionsgußmasse 27 zu bewirken. Das Beseitigen des dabei übrigbleibenden Restmonomers durch Erhitzen auf die zweite Schwelltemperatur kann dann in einem separaten Heizofen, unabhängig von der hier dargestellten Anordnung erfolgen. Für die Anwendung im integriertoptischen Anwendungsbereich ist es sinnvoll, eine zumindest im Bereich um die zu verwendenden optischen Wellenlängen optisch transparente Reaktionsgußmasse 27 zu wählen, damit eine verlustarme Führung der optischen Signale erreicht werden kann.

Ebenso ist für das Andrücken des Gußrahmens 20 an den Formstempel 10 jede äquivalente Druckerzeugung (Hydraulik, Pneumatik etc.) einsetzbar. Die Heizung kann ebenfalls auf beliebige andere Weise (Verbrennung, Induktion etc.) erfolgen. An Stelle der Führungsstangen 13 können auch andere Führungs- bzw. Positioniervorrichtungen oder - verfahren treten. Nach dem Aushärten der Reaktionsgußmasse 27 wird die Anordnung wieder entformt, indem das aus Gußrahmen 20 mit der verfestigten Reaktionsgußmasse 27 und dem darin eingebetteten elektrooptischen Bauelement 26 bestehende, entstandene integriert-optische Deckelbauteil vom Formstempel 10 und aus der Halterungsaussparung 22 entfernt wird.

Als Besonderheit ist es vorgesehen, die Reaktionsgußmasse 27 auch vom Gußrahmen 20 aus zu beheizen, indem eines oder mehrere der elektrischen oder elektrooptischen Bauelemente 26, 85, 87 dazu eingesetzt wird. Dazu sollte das elektrische oder elektrooptischen Bauelement 26, 85, 87 auch so ausgebildet sein, daß beispielsweise durch Bestromen desselben eine Hitzeentwicklung stattfindet. Insbesondere ist dazu das in Figur 5a gezeigte Heizelement 85 geeignet. Zur Hinführung des Stromes an das Heizelement 85 können entsprechende Zuleitungen beispielsweise auch von der Oberseite des Gußrahmens 20, also durch die Einfüllöffnungen 21 und/oder das Trägerelement 80 hindurch verlaufende Drähte, oder ähnliches dienen. Solche Heizelemente 85 können auch in größerer Stückzahl angeordnet werden. Dabei ist es ebenso vorgesehen, daß dasselbe Heizelement 85, das zum Beheizen der Reaktionsgußmasse 27 verwendet wurde, auch im entstandenen mikrostrukturierten Körper eine Funktion hat, die nicht unbedingt auch eine Heizfunktion sein muß, wie auch Heizelemente 85 angeordnet sein können, die nach der Fertigstellung des mikrostrukturierten Körpers gar keine Funktion mehr ausüben und als verlorene Strukturen gelten.

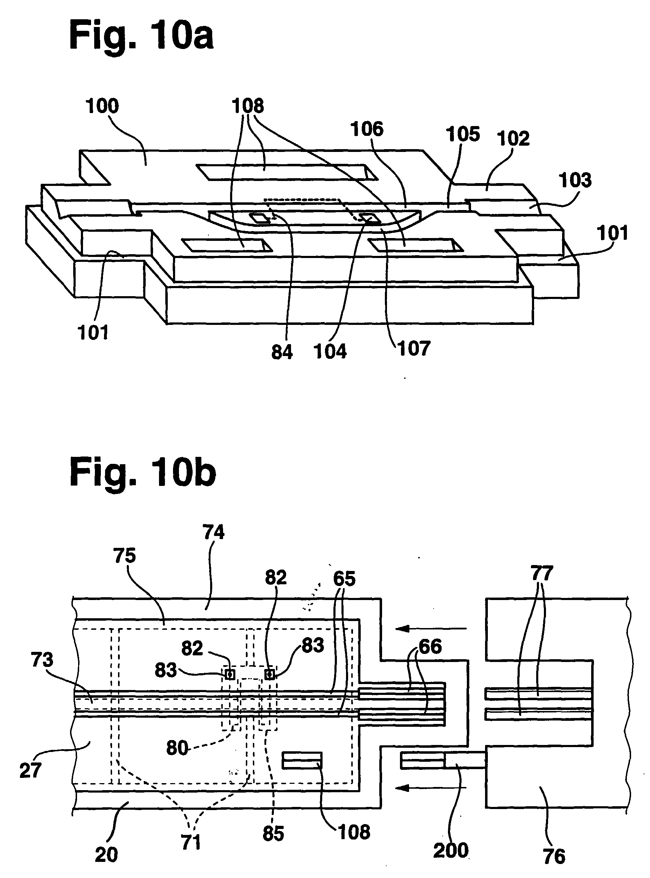

In Figur 10a wird ein mikrostrukturierter Körper 100 dargestellt, der unter Verwendung der in Figur 9 dargestellten Gußvorrichtung und der in Figur 7 gezeigten Gußform aus Gußrahmen 20 und Formstempel 10 erzeugt wurde.

Es handelt sich hierbei um eine perspektivische Ansicht der Unterseite, das heißt, der Seite, die den Abdruck der Vertiefung 61 der zweiten Bodenformplatte 93 aufweist. Die perspektivische Darstellung wurde jedoch nicht strikt eingehalten; es werden gestrichelt einige Elemente im Innern des mikrostrukturierten Körpers gezeigt.

Die Grundform des mikrostrukturierten Körpers 100 ist die eines Rechtecks mit an den kürzeren Seiten mittig angesetzten kleineren Rechtecken. Am Rand umlaufend befindet sich eine Stufe 101, welche von der Stufe im früheren Gußrahmen 20 herrührt. Der leicht nach innen versetzte Teil der Stufe 101 ist hierbei die frühere Dichtlippe 64 des Gußrahmens 20. Auf der dem Betrachter zugewandten Fläche befinden sich drei dachförmige Vertiefungen 108, welche Negativabdrücke der dachfirstförmigen Rahmenjustiererhebungen 46 in der zweiten Bodenformplatte 93 darstellen. Die Abdrücke der würfelförmigen Erhebungen 81 in der zweiten Bodenformplatte 93 sind die würfelförmigen Vertiefungen, welche Kontaktführungen 104 darstellen. Durch die Kontaktführungen ist es möglich, zwei Ausschnitte aus der Heizschleife 84, welche sich im Innern des mikrostrukturierten Körpers befindet, jedoch in Figur 9 trotzdem gestrichelt dargestellt wurde, zu erreichen und gegebenenfalls auch elektrischen Kontakt zu diesen herzustellen. Entlang der Längsachse des mikrostrukturierten Körpers 101 sind zwei Faserführungen 103, welche als dachförmige Vertiefungen ausgebildet sind. Sie sind die Negativabdrücke der früheren dachfirstförmigen Faserjustiererhebungen 62 in der zweiten Bodenformplatte 93. Die Faserführungen 103 werden durch eine Wellenleiternut 105 verbunden. Die Wellenleiternut 105 besteht aus einer Wellenleiterhauptnut 106, welche eine geradlinige Verbindung zwischen den beiden Faserführungen 103, sowie einer Wellenleiter-Bypass-Nut 107, welche von der Wellenleiterhauptnut 106 bei dessen Verbindung mit der einen dachfirstförmigen Faserführung 103 abzweigt, parallel zu der Wellenleiterhauptnut 106 zwischen den beiden fluchtenden dachfirstförmigen Rahmenjustiererhebungen 46 auf der einen Seite und den beiden Kontaktführungen 104 auf der anderen Seite hindurchführt, und sich bei der Verbindung des Hauptarms mit der anderen dachfirstförmigen Faserführung 103 wieder mit der Wellenleiterhauptnut 106 vereint.

Der mikrostrukturierte Körper 100 kann nun zu einem intergiert-optischen Bauteil komplettiert werden, indem die Nuten 105,106, 107 mit einem aushartenden, optisch transparenten Werkstoff befüllt werden. Hierbei ist zu berücksichtigen, daß der Brechungsindex des Materials zur Befüllung der Nuten größere sein muß als der der aushärtbaren, fließfähigen Masse 27. Zur Einbringung und Versiegelung des aushärtenden, optisch transparenten Werkstoffs in die Nuten 105, 106, 107 sind mehrere Verfahren bekannt. Es ist auch vorgesehen, mittels des oben geschilderten Verfahrens einen Deckel als zweites mikrostrukturiertes Bauteil zu erzeugen.

In Figur 10 b ist ein anderes, nach dem oben geschilderten Verfahren hergestelltes integriert-optisches Bauteil dargestellt. Auch hier wurde wiederum die Numerierung aus den Figuren 1 bis 9 beibehalten. Beispielhaft ist hier gezeigt, wie in der in der Zeichnung dem Betrachter zugewandt dargestellten Unterseite des mikrostrukturierten Körpers mehrere Vertiefungen 65, 66 entstanden sind. Davon sind zwei als an der Schmalseite des mikrostrukturierten Körpers liegende Vertiefungen 66 durch Abformung der dachfirstförmigen Erhebungen 62 entstanden und weisen somit einen invers-dachfirstförmigen Querschnitt auf. Die anderen beiden Vertiefungen 65 dagegen sind durch Abformung der quaderförmigen Erhebung 63 entstanden und weisen somit einen quaderförmigen Querschnitt auf. Darüber hinaus ist eine dachfirstförmige Vertiefung 108 vorhanden, welche zur Positionierung des Trägerelements 80 herangezogen wurde, und nach Fertigstellung des mikrostrukturierten Körpers nicht aufgefüllt wurde. In diesem Beispiel wurden mit einem anderen Formstempel 10 als in den Darstellungen in der Figur 6 jeweils zwei quaderförmige Vertiefungen 65 und insgesamt fünf invers-dachfirstförmige Vertiefungen 66 hergestellt. Generell ist es freigestellt, wie viele Erhebungen 62, 63, 81, 108 und in welcher Form diese auf dem Formstempel 10 angeordnet sind. In der verfestigten Reaktionsgußmasse 27 ist das Trägerelement 80 mit dem Heizelement 85 eingebettet, welches an die quaderförmigen Vertiefungen 65 angrenzt. Dort, wo die würfelförmigen Erhebungen 81 lagen, sind im mikrostrukturierten Körper würfelförmige Aussparungen 83 entstanden, durch die die Anschlußkontakte 82 sichtbar sind. Somit sind die Anschlußkontakte 82 zugänglich für eine elektrische Kontaktierung.

Weiter in der Figur 10b gezeigt ist ein Steckelement 76, welches die inverse Form der Stirnseite des mikrostrukturierten Körpers aufweist. Dadurch läßt sich das Steckelement 76 beispielsweise in Pfeilrichtung auf den mikrostrukturierten Körper aufschieben. Vorzugsweise wird dazu eine besonders exakte und spielfreie Passung für das Steckelement 76 und den korrespondierenden Teil des mikrostrukturierten Körpers gewählt. Insbesondere ist es vorgesehen, das Steckelement 76 mit einer Dachzunge zu versehen, welche in die dachförmige Vertiefung 108 am integriert-optischen Bauteil eingreift und somit eine spielfreie Passung und Sicherung gewährleistet. Ebenso ist es vorzuziehen, wenn die Außenkontur des mikrostrukturierten Körpers besonders präzise in Relation zur Lage der Vertiefungen 65, 66 hergestellt wurde. Dadurch ist es nämlich gewährleistet, daß Lichtleitfasern 77, welche im Steckelement 76 gehaltert sind, beim Steckvorgang bereits mit hoher Präzision über die invers-dachfirstförmigen Vertiefungen 66 gelangen, wo sie durch diese Vertiefungen 66 dann schließlich automatisch feinjustiert werden. Beim Verbinden mit den Lichtleitfasern 77 ist es von Vorteil, zunächst das Steckelement 76 in Pfeilrichtung auf den mikrostrukturierten Körper aufzuschieben, wobei die Lichtleitfasern 77 noch einen vorgegebenen Abstand von der Oberfläche des mikrostrukturierten Körpers aufweisen und dann die Lichtleitfasern 77 mit dem Steckelement 76 auf die Oberfläche des mikrostrukturierten Körpers abzusenken.

Mit dieser Anordnung ist es besonders möglich, eine exakte optische Ankopplung der Lichtleitfasern 77 an die quaderförmigen Vertiefungen 65 zu erreichen. Da es vorgesehen ist, den mikrostrukturierten Körper in einem weiteren Bearbeitungsschritt mit einem Polymerklebstoff zu beschichten, der wenigstens die quaderförmigen Vertiefungen 65 ausfüllt und somit dort je einen Wellenleiter bildet, wird dadurch eine gute Ankopplung zwischen den Lichtleitfasern 77 und den dadurch entstandenen Wellenleitern ermöglicht. Alternativ oder gleichzeitig mit den Lichtleitfasern 77 können auch elektrische Kontaktelemente in dem Steckelement 76 vorgesehen sein, die beim Aufstecken auf den mikrostrukturierten Körper mit entsprechenden Kontakten, beispielsweise eines bezüglich der Außenkontur des integriert-optischen Deckelbauteils präzise positioniert eingegossenen elektrischen, optischen oder elektrooptischen Bauelements, insbesondere eines Thermoaktors, in Kontakt gelangen. Die Aufsteckrichtung kann dabei ebenfalls variieren.

Sowohl für die Bodenformplatten als auch für das Einsatzelement 60 sind auch alternative Formgebungen denkbar und vorgesehen, welche einen mikrostrukturierte Körper mit anderer Funktionalität erzeugen. Die Weiterbildung des mikrostrukturierten Körpers zu einem integriert-optischen Bauteil ist hierbei vorgesehen, aber nicht zwingend.

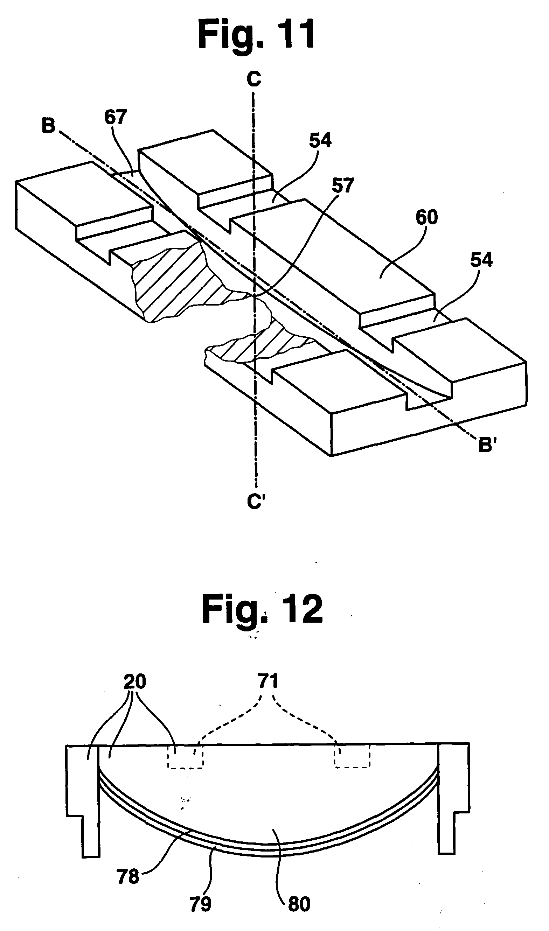

Ein weiteres Ausführungsbeispiel für das Einsatzelement 60 zeigt Figur 11. Zur besseren Übersichtlichkeit wurde ein Teil des Einsatzelements ausgebrochen. Das vorgesehene Einsatzelement 60 ist symmetrisch bezüglich einer Ebene, welche die Linien AA' und CC' einschließt. Der quaderförmige Grundkörper des Einsatzelements 60 wurde mit zwei in etwa parallel zu dessen kürzerer Seite verlaufenden Querkerben 54 versehen. Die Längskerbe 67 ist in diesem Beispiel jedoch nicht quaderförmig. Vielmehr ist ihr auf die Symmetrieebene projizierter Querschnitt einer Parabel ähnlich. Der Tiefenverlauf der Kerbe ist dergestalt, daß sie die Grundfläche des Einsatzelements 60 gerade berührt, und ihr auf eine Ebene senkrecht zu BB' projizierter Querschnitt ist rechteckig.

Mit diesem Einsatzelement 60 ist es möglich, mit der ansonsten gleichen Anordnung, wie bereits in den Figuren 4a, b gezeigt, einen weiteren Gußrahmen 20 herzustellen, bei dem das Trägerelement 80 entsprechend der Form der Längskerbe 67 gleichfalls einen variablen Dickenverlauf hat.

Der mit dem Einsatzelement 60 aus Figur 11 entstehende Gußrahmen 20 ist im Querschnitt entlang der Symmetrieebene in Figur 12 dargestellt. Dort, wo die Querkerben 54 sich befanden, sind wiederum die zwei Querstreben 71 entstanden, welche in der für Figur 12 gewählten Darstellung nicht sichtbar sind, und daher nur gestrichelt angedeutet wurden. Das Trägerelement 80 bildet einen in etwa senkrecht zu den Querstreben 71 verlaufenden Steg, der in der Mitte des Gußrahmens 20 seine größte Dicke aufweist.

Nach dem Entformen wird auf das Trägerelement 80 zunächst eine Metallschicht 78 und dann eine dielektrische Schicht 79 aufgebracht. Ihre Dicke wurde in Figur 12 übertrieben dargestellt. Diese beiden Schichten 78, 79 bilden nach Festlegstellung des mikrostrukturierten Körpers zusammen ein optisches Bauelement in Form eines getaperten Polarisators 87. Bei der folgenden Herstellung des mikrostrukturierten Körpers mit diesem Gußrahmen 20 entsteht eine Anordnung, bei der die beiden Schichten 78, 79 stetig an die Unterseite des mikrostrukturierten Körpers hin- und wieder weggeführt sind. Befindet sich dort ein Lichtwellenleiter, so fungiert der mikrostrukturierte Körper mit dem Taperelement 87 als optischer Polarisator, indem Licht, dessen elektrischer Folarisationsvektor parallel zu der Metallschicht liegt, schwächer gedämpft wird, als Licht mit einer dazu orthogonalen Polarisation. Die dielektrische Schicht 79 dient dabei der Einstellung dieses Effekts, da eine zu nahe Annäherung der Metallschicht 78 an den Lichtwellenleiter eine zu starke Dämpfung auch des durchzulassenden Folarisationstyps bewirken würde. Zur Herstellung des mikrostrukturierten Körpers mit einem optischen Polarisator wird ein Gußrahmen 20 nach Figur 12 auf eine zweite Bodenformplatte aufgesetzt, welche der zweiten Bodenformplatte 93 aus Figur 6 ähnelt und mindestens eine quaderförmige Erhebung 63 mit einem Hauptarm aufweist, so daß eine Gußform gebildet wird. Das Herstellen eines mikrostrukturierten Körpers 100 geschieht daraufhin wie oben angegeben. Durch Füllen der Wellenleiternut mit einem optisch transparenten, eine höhere Brechzahl aufweisenden Polymerklebstoff entsteht dann ein Wellenleiter, der direkt an das integriert-optische Taperelement 87 angekoppelt ist.

## Patentansprüche

1. Verfahren zur Herstellung eines mikrostrukturierten Körpers, dadurch gekennzeichnet, daß eine Gußform mindestens teilweise mit einer flüssigen Reaktionsgußmasse (27) befüllt wird, daß die Reaktionsgußmasse (27) ausgehärtet wird, daß die Gußform einen Gußrahmen (20) und eine zweite Bodenformplatte (93) aufweist, daß mindestens Teile der Gußform, insbesondere der Gußrahmen (20), Bestandteil des mikrostrukturierten Körpers werden, wobei der Gußrahmen (20) und die zweite Bodenformplatte (93) mit mikrostrukturtechnischen Methoden hergestellt werden.

2. Verfahren nach Anspruch 1, dadurch gekennzeichnet, daß das Aushärten der Reaktionsgußmasse (27) durch Erwärmen derselben, vorzugsweise großflächig von der Unterseite her, geschieht.

3. Verfahren nach einem der Ansprüche 1 oder 2, dadurch gekennzeichnet, daß für die zweite Bodenformplatte (93) ein ferromagnetisches Material ausgewählt wird und daß vor dem Aufsetzen des Gußrahmens (20) auf die zweite Bodenformplatte (93) die zweite Bodenformplatte (93) auf eine Trägerplatte (12) aufgelegt wird, wo sie mittels eines Magnetfeldes gehalten wird.

4. Verfahren nach einem der vorhergehenden Ansprüche, dadurch gekennzeichnet, daß in der Vertiefung (61) der zweiten Bodenformplatte (93) mindestens eine Erhebung angeordnet wird, die beim Umgießen mit der Reaktionsgußmasse (27) wenigstens eine entsprechende Vertiefung im integriert-optischen Bauteil hinterläßt.

5. Verfahren nach einem der vorhergeheenden Ansprüche, dadurch gekennzeichnet, daß der Gußrahmen (20) mit wenigstens einer invers-dachförmigen Trägerstruktur (45) versehen wird, daß die zweite Bodenformplatte (93) mit wenigstens einer dachförmigen Rahmenjustiererhebungen (46) versehen wird und somit die laterale und vertikale Justierung des Gußrahmens auf der Bodenformplatte erreicht wird.

6. Verfahren nach einem der vorhergehenden Ansprüche, dadurch gekennzeichnet, daß der Gußrahmen (20) mit wenigstens einem Trägerelement (80) versehen ist, auf welches wenigstens ein elektrisches, optisches oder elektrooptisches Bauelement (26, 85) auf das Trägerelement (80) aufgebracht wird, bevor der Gußrahmen (20) auf die zweite Bodenformplatte (93) zur Bildung der Gußform aufgelegt wird.

7. Verfahren nach Anspruch 6, dadurch gekennzeichnet, daß ein elektrisches oder elektrooptisches Element mit einem Strom beaufschlagt wird, daß es sich hierdurch erwärmt, und daß die Reaktionsgußmasse (27) hierdurch ausgehärtet wird.

8. Verfahren zur Herstellung eines Gußrahmens (20), dadurch gekennzeichnet, daß auf eine erste Bodenformplatte (53) ein Konturenrahmen (70) aufgesetzt wird, der einen Durchbruch (68) aufweist, dessen laterale Abmessungen mindestens gleich groß sind wie die lateralen Abmessungen einer in der ersten Bodenformplatte (53) angeordneten Vertiefung (55) und daß wenigstens ein Einsatzelement (60) in die Vertiefung (55) eingesetzt wird, so daß wenigstens lateral allseitig zwischen dem wenigstens einen Einsatzelement (60) und dem Konturenrahmen (70) ein Spalt verbleibt und daß durch Gießen einer aushärtbaren fließfähigen Gußrahmenmasse (56) in den Spalt und anschließendes Aushärten und Entformen der Gußrahmen (20) hergestellt wird.

9. Verfahren zur Herstellung eines Gußrahmens nach Anspruch 8, dadurch gekennzeichnet, daß der Konturenrahmen (70) über wenigstens ein Rahmenjustierelement (69) auf der ersten Bodenformplatte (53) justiert wird.

10. Verfahren zur Herstellung eines Gußrahmens nach Anspruch 8 oder 9, dadurch gekennzeichnet, daß das Einsatzelement (60) mit wenigstens einer Trägerelementsaussparung (67) versehen wird, in die gleichfalls die aushärtbare fließfähige Gußrahmenmasse (56) gegossen wird, so daß bei deren Aushärten in der Trägerelementsaussparung (67) wenigstens ein Trägerelement (80) als fest verbundenes Teil des entstehenden Gußrahmens (20) gebildet wird.

11. Verfahren zur Herstellung eines Gußrahmens nach einem der Ansprüche 7 bis 10, dadurch gekennzeichnet, daß auf der der ersten Bodenformplatte (53) abgewandten Oberseite des Einsatzelements (60) wenigstens eine in etwa horizontal verlaufende durchgehende Kerbe (58, 54) angeordnet wird, in die gleichfalls die aushärtbare fließfähige Gußrahmenmasse (56) gegossen wird, so daß bei deren Aushärten in der Kerbe (58, 54) wenigstens eine Verstrebung (71,73) als fest verbundenes Teil des entstehenden Gußrahmens (20) gebildet wird.

12. Verfahren zur Herstellung eines Gußrahmens nach einem der Ansprüche 7 bis 11, dadurch gekennzeichnet, daß in der Vertiefung (55) wenigstens eine Erhebung (50, 47) angeordnet wird, die beim Umgießen mit der aushärtbaren fließfähigen Gußrahmenmasse (56) wenigstens eine entsprechende Vertiefung (72, 45) im entstehenden Gußrahmen (20) hinterläßt.

13. Verfahren zur Herstellung eines Gußrahmens nach einem der Ansprüche 7 bis 12, dadurch gekennzeichnet, daß im Gußrahmen (20) wenigstens eine Hilfsstruktur (32) angeordnet oder hergestellt wird, die nach der Herstellung eines mikrostrukturierten Körpers mittels des entstandenen Gußrahmens (20) die Gefahr eines Verrutschens einer verfestigten aushärtbaren fließfähigen Masse (27) zum Boden des Gußrahmens (20) hin verringert.

14. Verfahren zur Herstellung eines Gußrahmens nach einem der Ansprüche 7 bis 13, dadurch gekennzeichnet, daß die Vertiefung (55) in der ersten Bodenformplatte (53) zusammen mit einer in ihren lateralen Abmessungen in etwa identischen, wannenförmigen Vertiefung 61 in einer zweiten Bodenformplatte (93) hergestellt wird, die bei der Herstellung eines mikrostrukturierten Körpers unter Verwendung des mittels der Vertiefung (55) entstandenen Gußrahmens (20) als Formstempel (10) zum Aufsetzen des Gußrahmens (20) dient.

15. Verfahren zur Herstellung einer ersten Bodenformplatte (53) und einer zweiten Bodenformplatte (93), wobei die erste Bodenformplatte zur Herstellung eines Gußrahmens (20) dient, der mit der zweiten Bodenformplatte (93) eine Gußform zur Herstellung eines mikrostrukturierten Körpers (100) bildet, wobei der Gußrahmen (20) nach Beendigung des Gußvorgangs integraler Bestandteil des mikrostrukturierten Körpers (100) wird, dadurch gekennzeichnet, daß die erste Bodenformplatte (53) und die zweite Bodenformplatte (93) jeweils durch Abformung jeweils eines Masters (205) mit einer Mesawand (204) gewonnen werden, wobei der Grundriß der Mesawand (204) des Masters (205) für die erste Bodenformplatte (53) und der Grundriß der Mesawand (204) des Masters (205) für die zweite Bodenformplatte (93) identische laterale Abmessungen aufweisen, und wobei die Schutzschicht (203) für die Herstellung der Mesawand (204) des Masters (205) für die erste Bodenformplatte (53) und die Schutzschicht (203) für die Herstellung der Mesawand (204) des Masters (205) für die zweite Bodenformplatte (93) vorzugsweise mit derselben oder mit identischen Masken Masken hergestellt wurden.

16. Mikrostrukturierter Körper (100), dadurch gekennzeichnet, daß er einen Gußrahmen (20) umfaßt, welcher mindestens teilweise mit einer durch Reaktion ausgehärteten Reaktionsgußmasse (27) befüllt ist, wobei während des Aushärtens der Gußrahmen (20) mit einer zweiten Bodenformplatte (93) eine Gußform bildete, und daß der Gußrahmen (20) und die zweite Bodenformplatte (93) mit mikrostrukturtechnischen Methoden hergestellt wurden.

17. Mikrostrukturierter Körper (100) nach Anspruch 16, dadurch gekennzeichnet, daß der Gußrahmen (20) mindestens ein Trägerelement (80) aufweist, auf welchem ein optisches, elektrisches oder elektrooptisches Bauelement angeordnet ist.

18. Mikrostrukturierter Körper nach Anspruch 16 oder 17, dadurch gekennzeichnet, daß in der verfestigten Reaktionsgußmasse mindestens eine Vertiefung (42,43) angeordnet ist.

19. Integriert-optisches Bauteil mit einem mikrostrukturierten Körper (100) nach Anspruch 18, dadurch gekennzeichnet, daß die Vertiefung (42,43) mit einer Füllmasse (51) aufgefüllt ist, und daß die gefüllte Vertiefung (42,43) als Wellenleiter dient.

20. Gußrahmen für die Herstellung eines mikrostrukturierten Körpers (100), bei der der Gußrahmen (20) auf eine zweite Bodenformplatte (93) aufgesetzt wird und anschließend ein Einfüllen einer aushärtbaren fließfähigen Masse (27) in den Gußrahmen (20) erfolgt, mit wenigstens einer an der Unterseite des Gußrahmens (20) liegenden Öffnung, dadurch gekennzeichnet, daß der Gußrahmen (20) mit wenigstens einem Trägerelement (80), welches zur Halterung wenigstens eines elektrischen, optischen oder elektrooptischen Bauelements (26, 85) dient, sowie wenigstens einer Öffnung zum Einfüllen der aushärtbaren fließfähigen Masse versehen ist.

21. Gußrahmen nach Anspruch 20, dadurch gekennzeichnet, daß an dessen Unterseite wenigstens ein Rastelement (75) angeordnet ist, das beim Auflegen des Gußrahmens (20) auf die zweiete Bodenformplatte (93) bei der Herstellung des mikrostrukturierten Körpers in ein korrespondierendes Gegenrastelement (64) auf der zweiten Bodenformplatte (93) einrastet.

22. Gußrahmen nach einem der Ansprüche 20 oder 21, dadurch gekennzeichnet, daß er eine in der Lage zum Rastelement (75) definierte Außenkontur aufweist.

23. Gußrahmen nach einem der Ansprüche 20 bis 22, dadurch gekennzeichnet, daß das Rastelement (75) eine Lippe aufweist, die dichtend in eine in der zweiten Bodenformplatte (93) angeordnete wannenförmige Vertiefung (61) eingreift.

24. Gußrahmen nach einem der Ansprüche 20 bis 23, dadurch gekennzeichnet, daß er wenigstens eine Einfüllöffnung (21) für die aushärtbare fließfähige Masse (27) aufweist.

25. Gußrahmen nach einem der Ansprüche 20 bis 24, dadurch gekennzeichnet, daß auf ihn ein Steckelement (76) aufsteckbar ist, in dem wenigstens eine Lichtleitfaser (77) gehaltert ist.

26. Gußrahmen nach einem der Ansprüche 20 bis 25, dadurch gekennzeichnet, daß er wenigstens eine Hilfsstruktur (32) aufweist, die nach der Herstellung des mikrostrukturierten Körpers die Gefahr eines Verrutschens der verfestigten aushärtbaren fließfähigen Masse (27) zum Boden des Gußrahmens (20) hin verringert.
